# EUROPEAN PATENT APPLICATION

(11) **EP 4 807 445 A1**
(43) Date of publication of application: **16.09.2026**
(21) Application number: 25760898.4
(22) Date of filing: 25.02.2025
(51) Int. Cl.: G03B 17/56

(54) **HOT SHOE ASSEMBLY, ON-CAMERA DEVICE, AND PHOTOGRAPHY SYSTEM**

(30) Priority: 28.02.2024 CN 202420376747 U
(71) Applicant: Godox Photo Equipment Co., Ltd., Shenzhen, Guangdong 518000 (CN)
(72) Inventor: ZENG, Weijun, Baoan District Shenzhen, Guangdong 518000 (CN); CHEN, Xianjun, Baoan District Shenzhen, Guangdong 518000 (CN)
(74) Representative: Studio Torta S.p.A.
(86) International application number: PCT/CN2025/078988
(87) International publication number: WO 2025/180357

(57) **Abstract**

A hot shoe assembly, an on-camera device, and a photography system. In the hot shoe assembly (10), a hot shoe connecting plate (12) arranged on a hot shoe body (11) can be used for connection to a camera, and can implement an electrical signal connection between the hot shoe assembly (10) and the camera. In addition, connecting portions (13) arranged on the hot shoe body (11) can enable the hot shoe body (11) to be detachably fixed on a functional assembly (20), and a female connector terminal (14) of the hot shoe assembly (10) can be electrically connected to a male connector terminal (24) of the functional assembly (20) to implement an electrical signal connection between the hot shoe assembly (10) and the functional assembly (20). Therefore, when equipping the functional assembly (20) for different brands and models of cameras, the same functional assembly (20) can be matched with different brands and models of cameras by simply providing the hot shoe assembly (10) comprising the corresponding hot shoe connecting plate (12), thereby effectively reducing the use costs of users and improving user experience.

## Description

This application claims priority to Chinese Patent Application No. 202420376747.6, filed with the China National Intellectual Property Administration on February 28, 2024 and titled "Hot Shoe Assembly, On-camera device, and Photography System", the entire contents of which are incorporated herein by reference.

### TECHNICAL FIELD

The present application relates to the technical field of photographic equipment, and more particularly relates to a hot shoe assembly, an on-camera device, and a photography system.

### BACKGROUND

In order to achieve improved expansion performance, some cameras are currently designed with a hot shoe interface on the top thereof for connection with external photographic devices, such as flashes, flash triggers, microphones, and the like, so as to realize expansion functions thereof.

However, there are currently various camera brands available on the market, such as Sony, Canon, Nikon, Fuji, and the like. Since the specifications of the hot shoe interfaces of different brands are different from each other, when a user owns multiple cameras of different brands, the user needs to separately purchase photographic devices compatible with the hot shoe interfaces of the corresponding brands, thereby resulting in relatively high usage costs and greatly affecting the user experience.

### SUMMARY

An objective of the present utility is to solve the technical problem in the prior art that an inflatable column lamp has a relatively small illumination surface, thereby resulting in poor lighting effects and affecting user experience.

The present utility model further aims to solve the technical problem in the prior art that, since the specifications of hot shoe interfaces of different camera brands are different, a user having multiple cameras of different brands needs to separately purchase photographic devices compatible with the hot shoe interfaces of the corresponding brands thereby resulting in relatively high usage costs and greatly affecting the user experience.

In order to solve the above technical problems, the present utility model provides a hot shoe assembly configured to realize connection between a camera and a functional assembly. The hot shoe assembly includes a hot shoe body, a hot shoe connecting plate, and a connecting portion. The hot shoe connecting plate is arranged on a surface of the hot shoe body. The hot shoe connecting plate is inserted into a hot shoe mount of the camera, and the hot shoe connecting plate includes hot shoe contacts arranged in a predetermined manner so as to realize an electrical signal connection between the hot shoe assembly and the camera. The connecting portion is arranged on the hot shoe body, and enables the hot shoe body to be detachably fixed to the functional assembly, such that the hot shoe assembly and the functional assembly are detachably connected. The hot shoe assembly further includes a female terminal arranged on the hot shoe body, and the female terminal is electrically connected to a male terminal of the functional assembly so as to realize an electrical signal connection between the hot shoe assembly and the functional assembly.

In some embodiments of the present application, the connecting portion is a block-shaped structure protruding from the hot shoe body.

In some embodiments of the present application, the connecting portion is a groove-shaped structure recessed in the hot shoe body.

In some embodiments of the present application, a notch groove is defined in a side wall of the hot shoe body, the connecting portion protrudes from within the notch groove, and a spacing between the connecting portion and the side wall of the notch groove defines a sliding groove configured to be engaged with the functional assembly.

In some embodiments of the present application, the hot shoe assembly further includes a movable latch arranged on the hot shoe body. The movable latch is movable along a height direction of the hot shoe body, such that an end portion of the movable latch extends outward from a surface of the hot shoe body facing away from the hot shoe connecting plate or retracts inward into the hot shoe body, and the end portion of the movable latch is configured for positioning and securing the functional assembly.

In some embodiments of the present application, the hot shoe assembly further includes a spring. Opposite ends of the movable latch are respectively a first end and a second end. The first end is extendable and retractable relative to the surface of the hot shoe body, and the second end of the movable latch is secured inside the hot shoe body through the spring.

In some embodiments of the present application, the hot shoe assembly further includes a release switch movably extending through a side wall of the hot shoe body. The release switch abuts against the movable latch so as to press the movable latch and compress the spring, such that the second end of the movable latch retracts into the hot shoe body. When the spring elastically extends, the second end of the movable latch extends outward from the surface of the hot shoe body.

In some embodiments of the present application, abutting surfaces between the release switch and the movable latch are inclined surfaces.

In some embodiments of the present application, the hot shoe assembly includes a hot shoe circuit board arranged inside the hot shoe body. The female terminal is electrically connected to the hot shoe circuit board, and the hot shoe circuit board is electrically connected to the hot shoe contacts.

In some embodiments of the present application, the hot shoe assembly further includes a wireless module configured to perform electrical signal transmission with an external flash. The wireless module is arranged inside the hot shoe body and is electrically connected to the hot shoe circuit board.

In some embodiments of the present application, the hot shoe body includes a main housing and a flip cover connected to the main housing. The hot shoe connecting plate is arranged on the main housing, and a mounting cavity is defined inside the main housing, with the wireless module arranged in the mounting cavity.

A mounting opening communicating with the mounting cavity is defined in a surface of the main housing facing away from the hot shoe connecting plate, and the flip cover is rotatably connected at the mounting opening of the main housing so as to open or close the mounting opening.

The present utility model further provides an on-camera device including the above-described functional assembly and hot shoe assembly. A mounting position is defined on a functional body of the functional assembly, and the hot shoe assembly is detachably connected at the mounting position.

In some embodiments of the present application, the mounting position is a groove structure recessed in the functional body. The functional assembly further includes a snap-fit piece protruding from a side wall of the mounting position, and the snap-fit piece is configured to engage with the connecting portion such that the hot shoe assembly and the functional assembly are detachably connected to each other.

In some embodiments of the present application, the functional assembly further includes a male terminal and a functional circuit board arranged inside the functional body. An end portion of the male terminal protrudes from an inner wall of the mounting position, and the male terminal is electrically connected to the functional circuit board.

In some embodiments of the present application, a positioning slot is defined in the functional body and arranged corresponding to the mounting position, and the positioning slot is configured for positioning and securing the hot shoe assembly.

In some embodiments of the present application, the functional assembly is a flash, a flash trigger, a microphone, a remote controller, or a GPS locator.

The present utility model further provides a photography system including a camera and the above-described on-camera device, where the camera is connected to the hot shoe connecting plate of the hot shoe assembly in the on-camera device.

In some embodiments of the present application, the photography system further includes one or more external flash units separated from the camera. The hot shoe assembly further includes a wireless module arranged inside the hot shoe body, and the hot shoe assembly performs electrical signal transmission with the one or more external flash units through the wireless module.

According to the above technical solutions, the present utility model provides the following beneficial effects. In the hot shoe assembly, on-camera device, and photography system of the present utility model, the hot shoe connecting plate arranged on the hot shoe body can be connected to a camera and can realize an electrical signal connection between the hot shoe assembly and the camera. In addition, the connecting portion arranged on the hot shoe body enables the hot shoe body to be detachably secured to the functional assembly, and the female terminal of the hot shoe assembly can be electrically connected to the male terminal of the functional assembly so as to realize electrical signal connection between the hot shoe assembly and the functional assembly. Therefore, when equipping cameras of different brands and models with functional assemblies, only the hot shoe assembly having a corresponding hot shoe connecting plate needs to be replaced in order to enable the same functional assembly to match cameras of different brands and models, thereby effectively reducing usage costs and improving user experience.

### BRIEF DESCRIPTION OF DRAWINGS

FIG. 1 is a schematic view of a first embodiment of a hot shoe assembly of the present utility model.
FIG. 2 is another schematic view of the hot shoe assembly shown in FIG. 1.
FIG. 3 is a top view of the hot shoe assembly shown in FIG. 2.
FIGS. 4 and 5 are schematic views showing different usage states of the hot shoe assembly shown in FIG. 2.
FIG. 6 is an exploded view of the hot shoe assembly shown in FIG. 2.
FIG. 7 is a schematic view of a second embodiment of the hot shoe assembly of the present utility model.
FIG. 8 is another schematic view of the hot shoe assembly shown in FIG. 7.
FIG. 9 is a further schematic view of the hot shoe assembly shown in FIG. 7.
FIG. 10 is a schematic view of a first embodiment of an on-camera device of the present utility model.
FIG. 11 is an exploded view of the on-camera device shown in FIG. 10.
FIG. 12 is a cross-sectional view of the on-camera device shown in FIG. 10.
FIGS. 13 and 14 are schematic views illustrating disengaged and connected states of the hot shoe assembly and functional assembly in the on-camera device shown in FIG. 10.
FIG. 15 is a schematic view of a second embodiment of the on-camera device of the present utility model.
FIG. 16 is an exploded view of the on-camera device shown in FIG. 15.

Reference numerals are explained as follows: 100, on-camera device; 10, hot shoe assembly; 11, hot shoe body; 111, base body; 1111, main housing; 1112, flip cover; 1113, mounting cavity; 1114, mounting opening; 112, boss body; 113, notch groove; 114, sliding groove; 115, mounting slot; 12, hot shoe connecting plate; 121, plate body; 122, hot shoe contact; 13, connecting portion; 14, female terminal; 15, hot shoe circuit board; 16, wireless module; 17, movable latch; 18, spring; 19, release switch; 20, functional assembly; 21, functional body; 210, mounting position; 211, insertion opening; 212, positioning slot; 22, snap-fit piece; 23, lamp head; 24, male terminal; 25, functional circuit board.

### DETAILED DESCRIPTION OF EMBODIMENTS

Typical embodiments illustrating the features and advantages of the present utility model are described in detail in the following description. It should be understood that the present utility model may have various modifications in different embodiments, all of which shall fall within the scope of the present utility model. The descriptions and illustrations are intended for explanatory purposes and are not meant to limit the utility model.

As used herein, it should be understood that directional or positional indications (such as up, down, left, right, front, and back) in the illustrated embodiments are provided for the mere purpose of ease of description and simplification, and do not indicate or imply that the devices or elements must have a specific orientation or be constructed and operated in a specific orientation. The descriptions are appropriate when the elements are positioned as shown in the figures. Should the positions of these elements change, the directional indications may also change accordingly.

Furthermore, the terms "first" and "second" are used for mere descriptive purposes and should not be understood as indicating relative importance or implicitly specifying the number of technical features. Accordingly, features designated as "first" or "second" may explicitly or implicitly include one or more of such features. As used herein, the term "plurality" means two or more, unless otherwise explicitly specified.

An embodiment of the present application provides a hot shoe assembly 10 configured to realize connection between a camera and a functional assembly 20. The functional assembly 20 may be any one of a flash, a flash trigger, a microphone, a remote controller, or a GPS locator. The hot shoe assembly 10 in this embodiment includes a hot shoe body 11, a hot shoe connecting plate 12, and a connecting portion 13.

Specifically, the hot shoe connecting plate 12 is arranged on a surface of the hot shoe body 11. The hot shoe connecting plate 12 is configured to connect to a camera and realize an electrical signal connection between the hot shoe assembly 10 and the camera. The connecting portion 13 is arranged on the hot shoe body 11 and enables the hot shoe body 11 to be detachably fixed to the functional assembly 20, such that the hot shoe assembly 10 and the functional assembly 20 are detachably connected to each other

In the hot shoe assembly 10 provided by the present application, the hot shoe connecting plate 12 arranged on the hot shoe body 11 can connect to the camera and realize electrical signal connection between the hot shoe assembly 10 and the camera. Moreover, the connecting portion 13 arranged on the hot shoe body 11 enables the hot shoe body 11 to be detachably secured to the functional assembly 20. Therefore, when equipping cameras of different brands and models with the functional assembly 20, only the hot shoe assembly 10 having a corresponding hot shoe connecting plate 12 needs to be provided to enable the same functional assembly 20 to match cameras of different brands and models, thereby effectively reducing user costs and improving user experience.

### First Embodiment of Hot Shoe Assembly 10

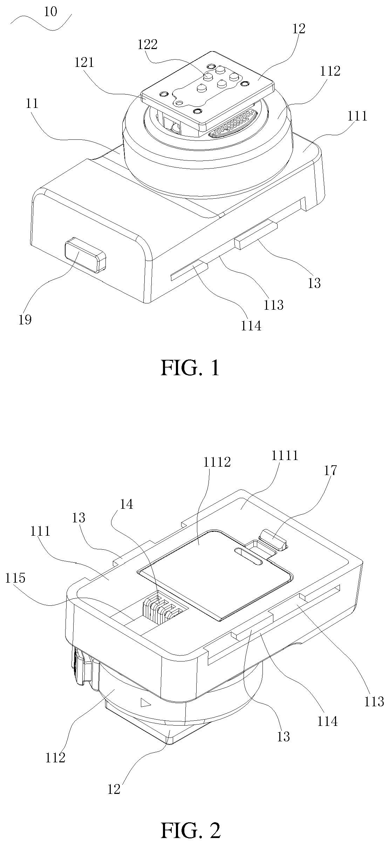

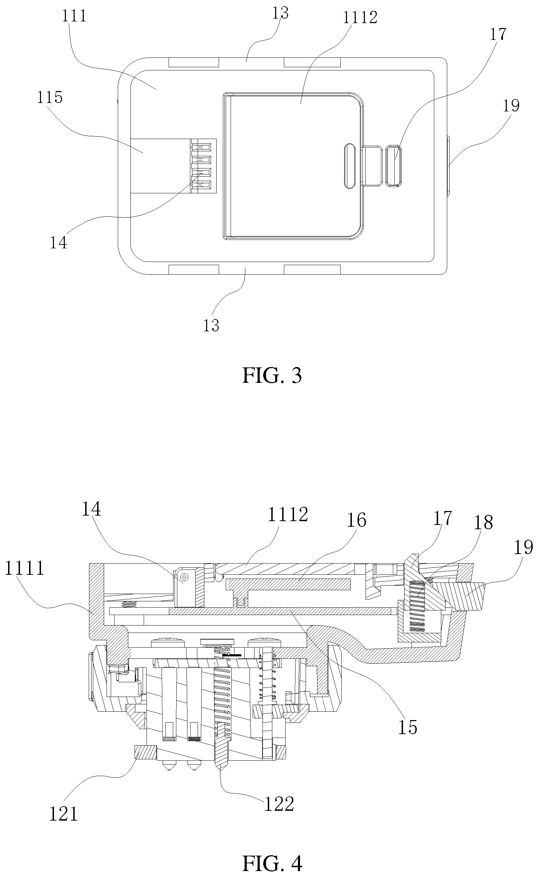

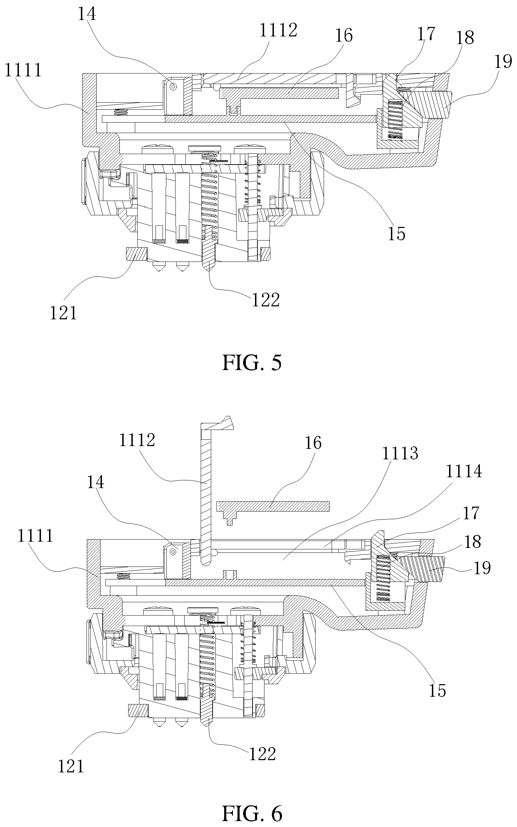

Referring to FIGS. 1 to 6, the hot shoe body 11 includes a base body 111 and a boss body 112. The outer contour of the base body 111 may be rectangular, and the outer contour of the boss body 112 may be circular. The boss body 112 is arranged on a surface of the base body 111, and the hot shoe connecting plate 12 is arranged on a surface of the boss body 112 facing away from the base body 111.

The hot shoe connecting plate 12 includes a plate body 121 and multiple hot shoe contacts 122 arranged on the plate body 121. The plate body 121 is fixed to the surface of the boss body 112, and the multiple hot shoe contacts 122 are spaced apart on a surface of the plate body 121 facing away from the hot shoe body 11. The plate body 121 is configured for a fixed connection to a camera, and the hot shoe contacts 122 are configured for an electrical connection to the camera.

For cameras of different brands and models, the hot shoe contacts 122 may have different structural forms and arrangements. A connecting groove may be formed in a side of the plate body 121, which is configured to snap-fit with the camera, thereby securing the hot shoe connecting plate 12 to the camera.

In this embodiment, the base body 111 has notch grooves 113 recessed at edges of opposite side walls. The connecting portion 13 may be a block-shaped structure protruding from within the hot shoe body 11, and the connecting portion 13 protrudes from the notch groove 113. A spacing between the connecting portion 13 and a side wall of the notch groove 113 forms a sliding groove 114 configured to be engaged with the functional assembly 20. The base body 111 has sliding grooves 114 formed in opposite side walls.

A mounting slot 115 is recessed in a surface of the base body 111 facing away the boss body 112. The hot shoe assembly 10 further includes a female terminal 14, which is arranged in the mounting slot 115. The female terminal 14 has a blade-shaped structure and is configured to be electrically connected to the male terminal 24 of the functional assembly 20, thereby realizing an electrical signal connection between the hot shoe assembly 10 and the functional assembly 20.

In other examples of this embodiment, the female terminal 14 of the hot shoe assembly 10 and the male terminal 24 of the functional assembly 20 may be configured as a pin-type interface. The male terminal 24 is a pin structure, and the female terminal 14 is a slot structure adapted to the pin, and their engagement enables electrical signal connection between the hot shoe assembly 10 and the functional assembly 20.

The hot shoe assembly 10 of this embodiment includes a hot shoe circuit board 15 arranged inside the hot shoe body 11. The hot shoe circuit board 15 is arranged within the base body 111, and the female terminal 14 is electrically connected to the hot shoe circuit board 15, which is electrically connected to the hot shoe contacts 122.

When the hot shoe connecting plate 12 is connected to the camera, the hot shoe contacts 122 are electrically connected to the camera. When the hot shoe assembly 10 is detachably connected to the functional assembly 20, the female terminal 14 of the hot shoe assembly 10 is electrically connected to the male terminal 24 of the functional assembly 20. Combined with the electrical connection between the female terminal 14 and the hot shoe circuit board 15, and the electrical connection between the hot shoe circuit board 15 and the hot shoe contacts 122, an electrical signal connection is established between the camera and the functional assembly 20 via the hot shoe assembly 10.

In this embodiment, the hot shoe assembly 10 further includes a wireless module 16 arranged inside the hot shoe body 11, which is electrically connected to the hot shoe circuit board 15.

The base body 111 includes a main housing 1111 and a flip cover 1112 connected to the main housing 1111. The hot shoe connecting plate 12 is arranged on the main housing 1111, and a mounting cavity 1113 is defined inside the main housing 1111 with the wireless module 16 arranged in the mounting cavity 1113. A mounting opening 1114 communicating with the mounting cavity 1113 is defined in a surface of the main housing 1111 facing away from the hot shoe connecting plate 12, and the flip cover 1112 is rotatably connected to the mounting opening 1114 to open or close the opening.

By opening the flip cover 1112, the wireless module 16 in the mounting cavity 1113 can be replaced, allowing a user to select a wireless module 16 of different frequencies to accommodate cameras with different frequencies, thereby improving the overall applicability of the hot shoe assembly 10.

In this embodiment, the hot shoe assembly 10 further includes a movable latch 17 arranged on the hot shoe body 11. The movable latch 17 may move along the height direction of the hot shoe body 11 so that an end of the movable latch 17 extends outward from a surface of the base body 111 facing away from the boss body 112 or retracts inward into the hot shoe body 11, and the end of the movable latch 17 is configured for positioning and securing the functional assembly 20.

The hot shoe assembly 10 further includes a spring 18 and a release switch 19. The movable latch 17 has a first end and a second end; the first end is extendable and retractable relative to the surface of the hot shoe body 11, and the second end is secured inside the hot shoe body 11 via the spring 18. The spring 18 is arranged inside the base body 111, and its elastic extension direction is consistent with the height direction of the hot shoe body 11.

The release switch 19 movably extends through a side wall of the hot shoe body 11 and abuts the movable latch 17 thus pressing the movable latch 17 to compress the spring 18, so that the second end of the movable latch 17 retracts into the hot shoe body 11. When the spring 18 elastically extends, the second end of the movable latch 17 extends outward from the surface of the hot shoe body 11. In this embodiment, the abutting surfaces between the release switch 19 and the movable latch 17 are inclined, and the movement direction of the release switch 19 is consistent with the length direction of the hot shoe body 11.

When the hot shoe assembly 10 is connected to the functional assembly 20, the sliding grooves 114 formed in opposite side walls of the base body 111 are engaged with the functional assembly 20, the connecting portion 13 is detachably connected to the functional assembly 20, and the female terminal 14 of the hot shoe assembly 10 is electrically connected to the male terminal 24 of the functional assembly 20. Further, the connecting groove formed in a side of the plate body 121 in the hot shoe connecting plate 12 snap-fits with the camera and electrically connects the hot shoe contacts 122 to the camera, thereby connecting the camera to the hot shoe assembly 10 and connecting the functional assembly 20 to the camera. Consequently, when equipping cameras of different brands and models with the functional assembly 20, only a hot shoe assembly 10 having a corresponding hot shoe connecting plate 12 needs to be provided to enable the same functional assembly 20 to match cameras of different brands and models, effectively reducing user costs and improving user experience.

### Second Embodiment of Hot Shoe Assembly 10

In this embodiment, the hot shoe assembly 10 is substantially the same as that of the first embodiment, with the main differences being the structural forms of the base body 111 and the connecting portion 13.

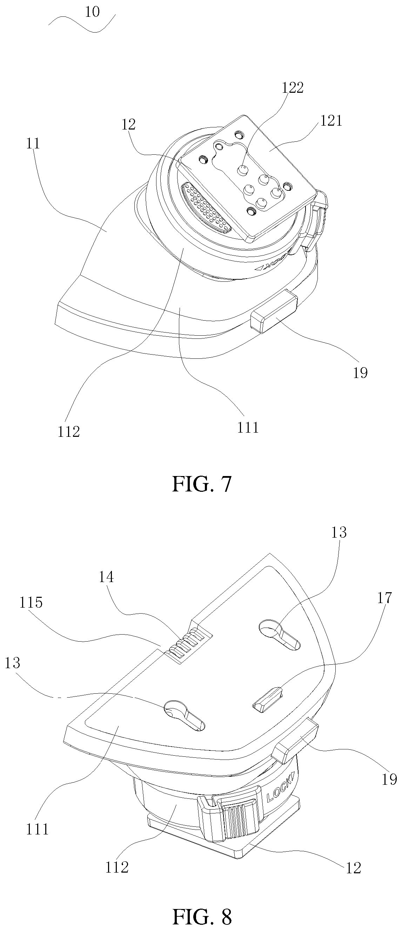

Specifically, referring to FIGS. 7 to 9, the hot shoe body 11 of this embodiment includes a base body 111 and a boss body 112. The base body 111 may a semicircular outer contour, and the boss body 112 may have a circular outer contour. The boss body 112 is arranged on the surface of the base body 111, and the hot shoe connecting plate 12 is arranged on a surface of the boss body 112 facing away from the base body 111.

The structures of the boss body 112 and the hot shoe connecting plate 12 in this embodiment are as described in the first embodiment of hot shoe assembly 10 and are not to be repeated here.

In this embodiment, the connecting portion 13 is a slot structure recessed in the hot shoe body 11. Specifically, the connecting portion 13 is recessed in the surface of the base body 111 facing away from the boss body 112. Multiple connecting portions 13 may be provided, and they are spaced apart on the surface of the base body 111. The connecting portions 13 are configured to be engaged with the functional assembly 20 so that the hot shoe assembly 10 can be detachably connected to the functional assembly 20. The shape and contour of the connecting portions 13 may be configured according to usage requirements, as long as snap engagement is achieved.

At the end-side walls of the base body 111, a mounting slot 115 may be defined corresponding to the surface of the connecting portion 13. The hot shoe assembly 10 further includes a female terminal 14, which is arranged in the mounting slot 115. In this embodiment, the female terminal 14 has a blade-mounted structure and is configured to be electrically connected to the male terminal 24 of the functional assembly 20 to realize electrical signal connection between the hot shoe assembly 10 and the functional assembly 20.

In other examples of this embodiment, the female terminal 14 of the hot shoe assembly 10 and the male terminal 24 of the functional assembly 20 may also be pin-type structures, where the male terminal 24 may be a pin and the female terminal 14 a slot adapted to the pin, enabling electrical signal connection between the hot shoe assembly 10 and the functional assembly 20.

The hot shoe assembly 10 of this embodiment includes a hot shoe circuit board 15 arranged inside the hot shoe body 11. The hot shoe circuit board 15 is arranged within the base body 111, and the female terminal 14 is electrically connected to the hot shoe circuit board 15, which is electrically connected to the hot shoe contacts 122.

When the hot shoe connecting plate 12 is connected to the camera, the hot shoe contacts 122 are electrically connected to the camera. When the hot shoe assembly 10 is detachably connected to the functional assembly 20, the female terminal 14 of the hot shoe assembly 10 is electrically connected to the male terminal 24 of the functional assembly 20. Combined with the electrical connection between the female terminal 14 and the hot shoe circuit board 15, and the hot shoe circuit board 15 connected to the hot shoe contacts 122, an electrical signal connection is established between the camera and the functional assembly 20 via the hot shoe assembly 10.

In this embodiment, the hot shoe assembly 10 further includes a movable latch 17 arranged on the hot shoe body 11, with connecting portions 13 respectively arranged on two sides of the latch 17.

The movable latch 17 may move along the height direction of the hot shoe body 11, allowing its end to extend outward from the surface of the base body 111 facing away from the boss body 112 or retract into the interior of the hot shoe body 11. The end of the latch 17 is used to position and secure the functional assembly 20.

In some embodiments of the present application, the hot shoe assembly further includes a spring. Opposite ends of the movable latch are respectively a first end and a second end. The first end is extendable and retractable relative to the surface of the hot shoe body, and the second end of the movable latch is secured inside the hot shoe body through the spring. The spring 18 is arranged inside the base body 111, with its elastic extension direction aligned with the height direction of the hot shoe body 11.

The release switch 19 is movably disposed through a side wall of the hot shoe body 11 and abuts against the movable latch 17, pressing the latch 17 to compress the spring 18, causing the second end of the latch 17 to retract into the hot shoe body 11; as the spring 18 elastically extends, the second end of the latch 17 extends outward from the surface of the hot shoe body 11. In this embodiment, the abutting surfaces between the release switch 19 and the movable latch 17 are inclined, and the movement direction of the release switch 19 is consistent with the length direction of the hot shoe body 11.

When the hot shoe assembly 10 is connected with the functional assembly 20, the groove-shaped connecting portions 13 on the base body 111 are engaged with the functional assembly 20, detachably connecting the hot shoe assembly 10 to the functional assembly 20. The female terminal 14 is electrically connected to the male terminal 24 of the functional assembly 20. Further, through the connecting groove formed in the side of the plate body 121 in the hot shoe connecting plate 12, it snap-fits with the camera and electrically connects the hot shoe contacts 122 to the camera, thereby connecting the camera to the hot shoe assembly 10 and connecting the functional assembly 20 to the camera. Consequently, when equipping cameras of different brands and models with the functional assembly 20, only a hot shoe assembly 10 having a corresponding hot shoe connecting plate 12 needs to be provided to enable the same functional assembly 20 to match cameras of different brands and models, effectively reducing user costs and improving user experience.

Furthermore, the present application provides an on-camera device 100, including the functional assembly 20 and the above hot shoe assembly 10. A mounting position 210 is defined on the functional body 21, and the hot shoe assembly 10 is detachably connected at the mounting position 210. The functional assembly 20 can be any of a flash, flash trigger, microphone, remote controller, or GPS locator.

Hereinafter, the structure of the on-camera device 100 is described with examples of a flash and a flash trigger. Hereinafter, the structure of the on-camera device 100 is described with a flash and a flash trigger as examples. When the functional assembly 20 is another component, the structure of the on-camera device 100 may be correspondingly modified, without limiting the scope herein.

### First Embodiment of On-camera device 100

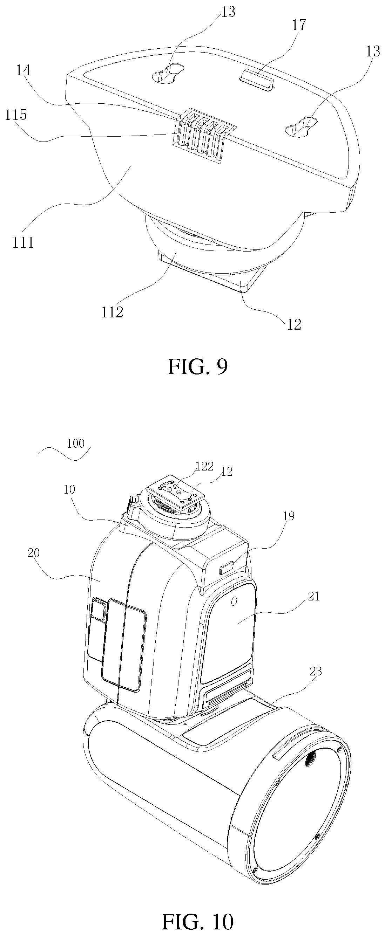

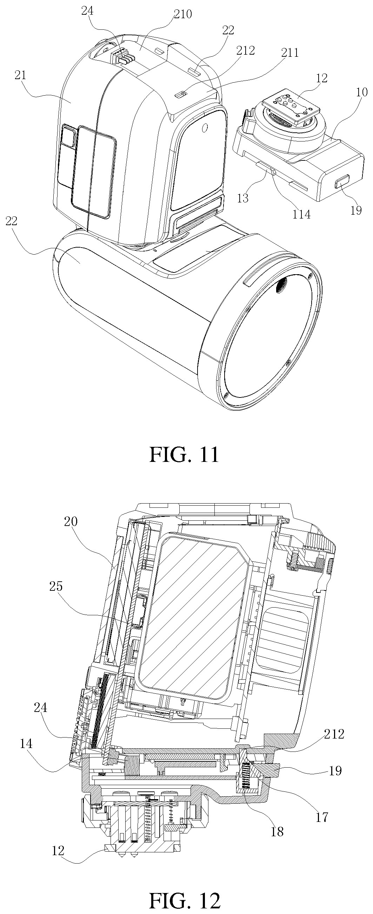

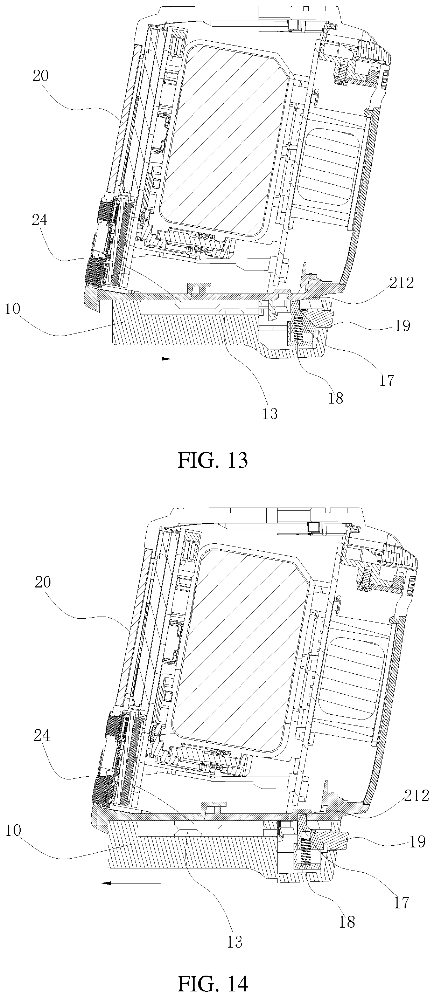

Referring to FIGS. 10 to 14, the on-camera device 100 in this embodiment includes a flash and the hot shoe assembly 10 of the first embodiment. The flash includes a functional body 21 and a lamp head 23 arranged on the functional body 21. The lamp head 23 is rotatably arranged at an end of the functional body 21 to allow adjustment of the flash angle.

The structure of the hot shoe assembly 10 according to the first embodiment has been set forth above and thus will not be described in detail here.

One end of the functional body 21 opposite to the lamp head 23 is provided with a mounting position 210 having a groove structure, and an insertion opening 211 communicating with the interior of the mounting position 210 is defined at an end portion of one side of the functional body 21 corresponding to the mounting position 210. The hot shoe assembly 10 may enter the mounting position 210 through the insertion opening 211, so as to realize detachable connection of the hot shoe assembly 10 in the mounting position 210.

In this embodiment, the functional assembly 20 further includes snap-fit pieces 22, and the opposite sides of the side wall of the mounting position 210 are each provided with a snap-fit piece 22, the snap-fit pieces 22 protruding from the side wall of the mounting position 210. In this embodiment, a positioning slot 212 is defined in the functional body 21, the positioning slot 212 being arranged corresponding to the mounting position 210 and adjacent to the insertion opening 211, and the positioning slot 212 being configured to position and secure the movable latch 17 of the hot shoe assembly 10.

The functional assembly 20 further includes a male terminal 24 and a functional circuit board 25 arranged inside the functional body 21, an end portion of the male terminal 24 protruding from an inner wall of the mounting position 210, and the male terminal 24 being electrically connected to the functional circuit board 25. In this embodiment, the male terminal 24 is arranged on the side wall of the mounting position 210 facing the insertion opening 211, and the male terminal 24 has a blade-shaped structure.

When the hot shoe assembly 10 is connected to the functional assembly 20, the hot shoe assembly 10 enters the mounting position 210 through the insertion opening 211, and the snap-fit pieces 22 may slide into the sliding groove 114 of the hot shoe body 11. When the hot shoe assembly 10 and the functional assembly 20 are connected in place, an end portion of the movable latch 17 is positioned and engaged in the positioning slot 212, the male terminal 24 is mated with the female terminal 14 of the hot shoe assembly 10, and the snap-fit pieces 22 abut against the connecting portion 13 on the side wall of the hot shoe body 11.

The connecting grooves formed in side edges of the plate body 121 of the hot shoe connecting plate 12 are further engaged with the camera, and the hot shoe contacts 122 are electrically connected to the camera, such that the camera is connected to the on-camera device 100, thereby connecting the functional assembly 20 to the camera.

When disconnecting the hot shoe assembly 10 from the functional assembly 20, the release switch 19 is pressed to retract the end portion of the movable latch 17 into the interior of the hot shoe body 11, so that the movable latch 17 is disengaged from the positioning slot 212, and the hot shoe body 11 is then moved outward, causing the snap-fit pieces 22 to disengage from the connecting portions 13 and slide out from the sliding groove 114, thereby detaching the hot shoe assembly 10 from the functional assembly 20.

Therefore, for the same flash, only the correspondingly adapted hot shoe assembly 10 needs to be replaced for cameras of different brands and models, without purchasing multiple matching flashes, thereby reducing the user's usage cost.

### Second Embodiment of On-camera device 100

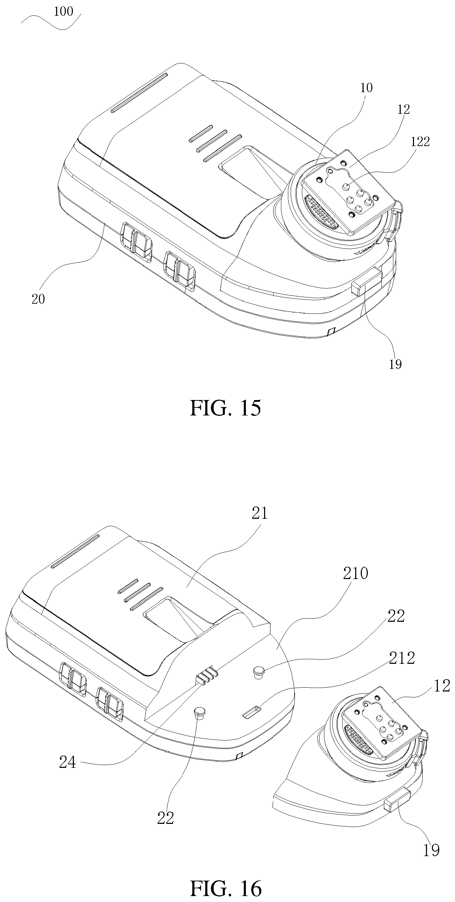

Referring to FIGS. 15 and 16, the on-camera device 100 in this embodiment includes the functional assembly 20 and the above hot shoe assembly 10. The functional body 21 of the functional assembly 20 defines a mounting position 210, and the hot shoe assembly 10 is detachably connected at the mounting position 210. In this embodiment, the functional assembly 20 is a flash trigger, and the hot shoe assembly 10 has the structure shown in the second embodiment.

One end of the surface of the functional body 21 defines a notch-shaped mounting position 210. The side wall of the mounting position 210 is provided with a protruding male terminal 24, which is electrically connected to the functional circuit board 25 inside the functional body 21. The male terminal 24 has a blade-like structure.

In this embodiment, the functional assembly 20 further includes a snap-fit piece 22, which is arranged on the surface of the mounting position 210 corresponding to the functional body 21, and protrudes from the surface of the mounting position 210. A positioning slot 212 is defined in the functional body 21, arranged corresponding to the mounting position, and is configured to position and secure the movable latch 17 of the hot shoe assembly 10.

When the hot shoe assembly 10 is mated with the functional assembly 20, the snap-fit piece 22 engages with the groove-shaped connecting portion 13 of the hot shoe body 11, and the end of the movable latch 17 is positioned and engaged in the positioning slot 212. At this time, the male terminal 24 mates with the female terminal 14 of the hot shoe assembly 10, forming an electrical connection.

By mating the connecting grooves in the sides of the plate body 121 of the hot shoe connecting plate 12 with the camera and electrically connecting the hot shoe contacts 122 to the camera, the camera is connected to the on-camera device 100, thereby connecting the functional assembly 20 to the camera.

When the connection between the hot shoe assembly 10 and the functional assembly 20 is released, pressing the release switch 19 retracts the end of the movable latch 17 into the interior of the hot shoe body 11, disengaging the latch 17 from the positioning slot 212 and releasing the snap-fit piece 22 from the connecting portion 13, thereby detaching the hot shoe assembly 10 from the functional assembly 20.

Therefore, for the same flash trigger, for different brands and models of cameras, only the appropriately adapted hot shoe assembly 10 needs to be replaced, without purchasing multiple matching flashes, saving user costs.

Additionally, one embodiment of the present application provides a photography system including a camera and the above on-camera device 100. The structure of the on-camera device 100 has been described above and will not be repeated here. When the on-camera device 100 is connected to the camera, the connecting grooves in the sides of the plate body 121 of the hot shoe connecting plate 12 engage with the camera, and the hot shoe contacts 122 are electrically connected to the camera, thereby forming a connection between the camera and the on-camera device 100.

In this embodiment, the photography system may further include one or more external flashes separated from the camera. The hot shoe assembly 10 in this embodiment further includes a wireless module arranged inside the hot shoe body 11. The hot shoe assembly 10 transmits electrical signals to one or more external flashes via the wireless module, enabling control of multiple external flashes and enhancing the overall photographic effect of the system.

For the hot shoe assembly, on-camera device, and photography system in this embodiment, the hot shoe connecting plate arranged on the hot shoe body can be connected to the camera and achieve electrical signal connection between the hot shoe assembly and the camera. Moreover, the connecting portions arranged on the hot shoe body allow the hot shoe body to be detachably fixed to the functional assembly, and the female terminals of the hot shoe assembly can electrically connect to the male terminals of the functional assembly, realizing electrical signal connection between the hot shoe assembly and the functional assembly. Thus, for different brands and models of cameras, simply providing the hot shoe assembly with the corresponding connecting plate allows the same functional assembly to match various cameras, effectively reducing user costs and improving user experience.

Although the present utility model has been described with reference to several typical embodiments, it should be understood that the terminology used is illustrative and exemplary, not restrictive. Since the present utility model can be embodied in various forms without departing from its spirit or essence, it should be understood that the above embodiments are not limited to any specific details, and should be broadly interpreted within the scope and spirit defined by the appended claims. Therefore, all variations and modifications falling within the claims or their equivalents are encompassed by the appended claims.

## Claims

1. A hot shoe assembly, configured for connecting a camera and a functional assembly, comprising:
a hot shoe body;
a hot shoe connecting plate, arranged on a surface of the hot shoe body, the hot shoe connecting plate being configured to be inserted into a hot shoe mount of the camera and having hot shoe contacts arranged in a predetermined manner to electrically connect the hot shoe assembly with the camera;
a connecting portion, arranged on the hot shoe body and configured to detachably secure the hot shoe body to the functional assembly, enabling a detachable connection between the hot shoe assembly and the functional assembly;
wherein the hot shoe assembly further comprises a female terminal arranged on the hot shoe body, the female terminal being configured to be electrically connected to a male terminal of the functional assembly to enable an electrical signal connection between the hot shoe assembly and the functional assembly.

2. The hot shoe assembly of claim 1, wherein the connecting portion is a block-shaped structure protruding from the hot shoe body.

3. The hot shoe assembly of claim 1, wherein the connecting portion is a slot-shaped structure recessed in the hot shoe body.

4. The hot shoe assembly of claim 1, wherein a side wall of the hot shoe body defines a notch groove, wherein the connecting portion protrudes from within the notch groove, and a spacing between the connecting portion and a side wall of the notch groove forms a sliding groove configured to engage the functional assembly.

5. The hot shoe assembly of claim 1, further comprising a movable latch arranged on the hot shoe body, the movable latch being movable along a height direction of the hot shoe body, such that an end of the movable latch is operative to extend outward from a surface of the hot shoe body facing away from the hot shoe connecting plate or retract into an interior of the hot shoe body, the end of the movable latch being configured to position and secure the functional assembly.

6. The hot shoe assembly of claim 5, further comprising a spring, wherein the movable latch has a first end and a second end, the first end being extendable and retractable relative to the surface of the hot shoe body, and the second end being secured inside the hot shoe body by the spring.

7. The hot shoe assembly of claim 6, further comprising a release switch movably disposed through a side wall of the hot shoe body, the release switch abutting against the movable latch to press the movable latch to compress the spring thus enabling the second end of the movable latch to retract into the hot shoe body; the spring is operative to elastically extend thereby causing the second end of the movable latch to extend outward from the surface of the hot shoe body.

8. The hot shoe assembly of claim 7, wherein abutting surfaces between the release switch and the movable latch are inclined surfaces.

9. The hot shoe assembly of claim 1, further comprising a hot shoe circuit board arranged inside the hot shoe body, wherein the female terminal is electrically connected to the hot shoe circuit board, and the hot shoe circuit board is electrically connected to the hot shoe contacts.

10. The hot shoe assembly of claim 9, further comprising a wireless module configured to transmit electrical signals to an external flash; the wireless module is arranged inside the hot shoe body and electrically connected to the hot shoe circuit board.

11. The hot shoe assembly of claim 10, wherein the hot shoe body comprises a main housing and a flip cover connected to the main housing; the hot shoe connecting plate is arranged on the main housing; the main housing defines a mounting cavity in which the wireless module is arranged; a mounting opening communicating with the mounting cavity is defined in a surface of the main housing facing away from the hot shoe connecting plate, and wherein the flip cover is rotatably connected to the mounting opening to open or close it.

12. An on-camera device, comprising a functional assembly and the hot shoe assembly of any one of claims 1-11, wherein a mounting position is defined on a functional body of the functional assembly, and the hot shoe assembly is detachably connected at the mounting position.

13. The on-camera device of claim 12, wherein the mounting position is a recessed groove structure in the functional body, wherein the functional assembly further comprises a snap-fit piece protruding from a side wall of the mounting position, the snap-fit piece being configured to engage with the connecting portion so that the hot shoe assembly is detachably connected to the functional assembly.

14. The on-camera device of claim 13, wherein the functional assembly further comprises a male terminal and a functional circuit board arranged inside the functional body; an end of the male terminal protrudes from an inner wall of the mounting position and is electrically connected to the functional circuit board.

15. The on-camera device of claim 12, wherein the functional body defines a positioning slot corresponding to the mounting position, the positioning slot being configured to position and secure the hot shoe assembly.

16. The on-camera device of claim 12, wherein the functional assembly is a flash, flash trigger, microphone, remote controller, or GPS locator.

17. A photography system, comprising a camera and the on-camera device of any one of claims 12 to 16, wherein the camera is connected to the hot shoe connecting plate of the hot shoe assembly in the on-camera device.

18. The photography system of claim 17, further comprising one or more external flashes separated from the camera; the hot shoe assembly further comprises a wireless module arranged inside the hot shoe body, and the hot shoe assembly is configured to transmit electrical signals to the one or more external flashes via the wireless module.
